# EUROPEAN PATENT SPECIFICATION

(11) **EP 1 588 622 B1**
(45) Date of publication and mention of the grant of the patent: **11.07.2007**
(21) Application number: 05075975.2
(22) Date of filing: 25.04.2005
(51) Int. Cl.: A22C 21/06

(54) **Device and method for cutting a vent loose from a carcass**
Vorrichtung und Verfahren zum Herausschneiden des Afters von Tierkörpern
Dispositif et méthode pour inciser la région anale de la carcasse d'un animal

(30) Priority: 23.04.2004 NL 1026016
(43) Date of publication of application: 26.10.2005
(73) Proprietor: Systemate Group B.V., 3281 NC Numansdorp (NL)
(72) Inventor: Stooker, Dirk Cornelis, 3295 AL 'S-Gravendeel (NL)
(74) Representative: Nederlof, Etienne C.

(56) References cited:
- EP-A- 0 722 666
- EP-A- 0 820 697
- EP-A- 0 843 971
- US-A- 5 688 164

## Description

The invention relates to a device and method for cutting a vent loose from a carcass, particularly a carcass of slaughtered poultry.

Devices of this type are also called vent cutters and operate in cooperation with means for keeping the carcass in the correct position for the vent cutter. For cutting loose the vent from the carcass the known devices usually use a hollow cylindrical blade having a cutting edge at its distal end and positioned within it a centring pin extending parallel to the centre line of the blade. The latter means usually comprise an overhead conveyor having trolleys provided with leg shackles, from which the carcasses hanging down are passed along a set-up with vent cutters.

In the process of cutting the vent loose first the centring pin is moved downwards into the vent opening of the carcass. Said centring pin can be moved up and down in axial direction within the hollow cylindrical blade, so that initially, during centring using the centring pin, the blade can still be held above the vent. After the centring pin has been urged sufficiently far into the rectum that is contiguous to the vent opening, the drive of the cylindrical blade is activated and the blade is moved downwards to cut the vent around the orbicular muscle loose from the area of the skin of the carcass beyond it. The blade then moves axially to near or over the distal end of the centring pin. With suitable means the orbicular muscle area is subsequently retained in the vent cutter and the vent can be pulled upwards out of the carcass by retracting the vent cutter, wherein the rectum is pulled along and/or stretched a way. Then the vent cutter is operated to release the vent and rectum, after which they remain outside of the carcass.

For retaining the orbicular muscle area, the known devices for instance use a centring pin provided with a helical rib. Said helical rib effects that the orbicular muscle during rotation of the centring pin is pulled slightly upwards in the direction of the blade. During the removal of the vent, after cutting it loose, the vent area is retained by the rib. A drawback of this construction is that the vent area may slide from the rib. As a result on the one hand the vent that has been cut loose will not end up in the correct place, which may cause failures, at least in further treatment steps. On the other hand dirt may escape from the vent or be taken along by the rib, due to which the carcass and/or the device may get contaminated.

In a different type of known device for cutting out the vent from a poultry carcass, the centring pin is provided with a truncated conical thickened end, behind which the orbicular muscle - after insertion of the centring pin into the vent - is placed. The thickened head is provided with bores for retaining pins placed axially and around the centring pin and positioned within the blade. When the blade has cut through the vent the retaining pins are moved in axial direction towards the thickened head. The orbicular muscle is thereby punctured and the vent is thus retained at the centring pin after which the vent can be removed. A drawback of puncturing the orbicular muscle by the retaining pins is that said perforation may rupture, due to which dirt may escape from the vent, as a result of which the carcass and/or the device may get contaminated. Such a device is known from document EP-A-0 820697. Another similar device is known from EP-A-0 722 666

In the slaughtering industry, automation of the slaughtering treatments and an increase of the treatment frequency is constantly strived for, yet in such a way that this does not entail a more inaccurate or more failure prone treatment. It is an object of the invention to provide a device of the type mentioned in the preamble, with which a quicker or more accurate or less failure prone treatment is possible.

To that end the invention provides a device for cutting a vent loose from a carcass, comprising
a hollow cylindrical blade having a cutting edge at its distal end for cutting the vent loose,
a centring pin positioned within it, and extending parallel to the centre line of the blade,
driving means for rotatingly driving the blade, and
clamping means which are substantially radially movable with respect to the centring pin for clamping an orbicular muscle area of the vent or an intestinal section thereof.

In the known device the rectum of the carcass is loaded in axial direction for clamping the orbicular muscle, on the one hand due to the helical motion of the centring pin with helical rib, on the other hand due to moving the centring pin upward for puncturing the orbicular muscle with the retaining pins. Said axial load may cause several problems. On the one hand, as discussed above, the orbicular muscle may slide from the centring pin due to said axial load, after which the vent and rectum cannot be placed outside of the carcass. On the other hand the orbicular muscle area or the rectum may rupture, as a result of which the carcass may be contaminated by residues of faeces that are in the rectum. These problems may disrupt the slaughter treatment.

By using clamping means, which, for the clamping of the orbicular muscle area or the rectum, are substantially radially movable with respect to the centring pin, the said axial load of the rectum, at least during clamping, is at least largely avoided. In this way the above-mentioned problems are at least largely prevented.

The motion carried out by the clamping means for clamping may have axial or rotational components, but is substantially radially oriented. Preferably said axial or rotational components of the motion of the clamping means are small or even absent and the clamping means are substantially radially or entirely radially moveable with respect to the centring pin.

In an embodiment of the device according to the invention a part of the centring pin that can be disposed in the vent comprises first clamping means and a part of the blade that can be disposed in the carcass comprises second clamping means, wherein at least one of the first and second clamping means is movable in substantially radial direction for clamping the orbicular muscle area of the vent or an intestinal section thereof between said first and second clamping means.

In a further embodiment the first clamping means are movable from a first position near the centring pin to a second position near the second clamping means. In a simple embodiment an inner side of the blade forms the second clamping means. The first clamping means are then formed at the outside of the centring pin.

In an embodiment, at least during clamping, the first and second clamping means are placeable in a fixed position of rotation with respect to each other. Preferably the first and second clamping means are placed in a fixed position of rotation prior to activating the clamping means for clamping the orbicular muscle area of the vent or an intestinal section thereof. As a result during clamping and subsequently retaining the orbicular muscle area of the vent or an intestinal section thereof it is prevented that the first and second clamping means are able to rotate with respect to each other. Such a rotation may namely lead to a rupture in the orbicular muscle area or the rectum, as a result of which the carcass is contaminated by residues of faeces that are in the rectum.

In an embodiment at least one of the first and second clamping means comprises a hollow cylinder, which hollow cylinder is made of a resilient material, and wherein the device comprises means for moving both end planes of the hollow cylinder towards each other for the bulging thereof in radial direction. In the bulging condition the orbicular muscle area of the vent or an intestinal section thereof can be clamped between the first and second clamping means and the rectum can be closed off. For releasing the orbicular muscle area of the vent or an intestinal section thereof both end planes of the hollow cylinder are moved apart due to which the radial bulging is ended again.

In an embodiment the hollow cylinder, at least near a clamping surface of said clamping means, comprises an annular section having a higher flexibility than the sections of the hollow cylinder adjacent to this annular section. When moving both end planes of the hollow cylinder towards each other for bulging thereof in radial direction, the hollow cylinder will more easily and therefore preferably deform at the annular section due to the higher flexibility thereof. Therefore said embodiment on the one hand offers the advantage that the hollow cylinder bulges more easily, due to which the force needed to move the end planes towards each other can be smaller, and on the other hand the advantage that the location of the bulging will be located in or near the annular section, as a result of which the axial position of the bulging is defined better.

On the one hand the annular section can be made of a material that is more flexible than the material of the sections of the hollow cylinder adjacent to this annular section. On the other hand the annular section of the hollow cylinder may comprise a thinner wall thickness than the sections of the hollow cylinder adjacent to this annular section. A combination of both measures is also possible.

In a simple embodiment the hollow cylinder at a side of the annular section facing away from the clamping surface is provided with one or more substantially annular channels. At the location of an annular channel the wall thickness of the hollow cylinder thus is thinner than near the sections of the hollow cylinder adjacent to the annular channel. In an embodiment having one channel, said channel extends in axial direction over the annular section. In an embodiment having a plurality of channels, the channels are placed in axial direction divided over the annular section.

In a further embodiment the hollow cylinder is placed around the centring pin. Preferably the centring pin comprises an axial assembly comprising a central inner tube and an axially slidable outer tube surrounding it. In this case the one end plane of the hollow cylinder is attached to inner tube, and the other end plane of the hollow cylinder is attached to the outer tube. With a relatively axial displacement of the outer tube with respect to the inner tube, the end planes of the hollow cylinder can now be moved towards each other for letting the hollow cylinder bulge in radial direction, or be moved apart for ending the radial bulging of the hollow cylinder.

In a simple embodiment the hollow cylinder, at an inner side of the annular section of the hollow cylinder facing the centring pin, is provided with the one or more substantially annular channels.

In an embodiment at least one of the first and second clamping means comprises a bellows or a balloon, wherein the bellows or balloon can be hydraulically or pneumatically pumped up for the bulging thereof in radial direction. Also in this case in the bulged condition, the orbicular muscle area of the vent or an intestinal section thereof can be clamped between the first and second clamping means and the rectum can be closed off. Preferably the bellows or balloon is placed around the centring pin.

In an embodiment the bellows or balloon, at least near a clamping surface of this clamping means comprises an annular section having a higher flexibility than the sections of the bellows or balloon adjacent to this annular section. When pumping up the bellows or balloon for the bulging thereof in radial direction, the bellows or balloon will more easily and therefore preferably deform at the annular section due to its higher flexibility. Therefore this embodiment on the one hand offers the advantage that the bellows or balloon bulges more easily, due to which the pressure needed for pumping up can be smaller, and on the other hand the advantage that the location of the bulging will be located in or near the annular section, as a result of which the axial position of the bulging is defined better.

On the one hand the annular section may be made of a material that is more flexible than the material of the sections of the bellows or balloon adjacent to this annular section. On the other hand the annular section of the bellows or balloon may comprise a thinner wall thickness than the sections of the bellows or balloon adjacent to this annular section. A combination of both measures is also possible.

In a simple embodiment the bellows or balloon at a side of the annular section facing away from the clamping surface is provided with one or more substantially annular channels. At the location of an annular channel the wall thickness of the bellows or balloon thus is thinner than near the sections of the bellows or balloon adjacent to the annular channel. In an embodiment having one channel, said channel extends in axial direction over the annular section. In an embodiment having a plurality of channels, the channels are placed in axial direction divided over the annular section.

In an embodiment the centring pin comprises a thickened head at a distal end thereof to be disposed in the vent for closing off the vent opening of the carcass. In this way it can largely be prevented that residues of faeces flow out of the rectum and contaminate the carcass.

In a further embodiment the blade and the centring pin are mutually axially displaceable. As a result it is possible to first dispose the centring pin in the vent opening and subsequently cut the vent loose using the blade, wherein the centring pin retains its axial position with respect to the carcass.

From another aspect the invention provides a method for cutting a vent loose from a carcass, comprising
at least partially disposing a centring pin in the vent,
cutting the vent loose by means of a rotatingly driven hollow cylindrical blade that remotely surrounds the centring pin and has a cutting edge at a distal end thereof, wherein the centring pin extends parallel to the centre line of the blade,
clamping an orbicular muscle area of the vent or an intestinal section thereof with clamping means by a radial displacement of said clamping means with respect to the centring pin.

Preferably a part of the centring pin disposed in the vent comprises first clamping means, and a part of the cylindrical blade disposed in the carcass comprises second clamping means, wherein at least one of the first and second clamping means is displaced in radial direction for clamping the orbicular muscle area of the vent or an intestinal section thereof between said first and second clamping means.

From another aspect the invention provides an assembly for treating a carcass of slaughtered cattle, particularly slaughtered poultry, comprising a device for cutting a vent loose from the carcass as described above. Preferably the assembly comprises positioning means for positioning the carcass with respect to the device for cutting the vent loose, and tensioning means for at least while the vent is cut loose retaining the carcass.

An example of such an assembly is an assembly for eviscerating slaughtered poultry. Such an assembly comprises a conveyor, for instance an overhead conveyor having trolleys provided with leg shackles, for conveying the carcasses past a number of treatment devices. In this case the carcasses are suspended from their legs the vent opening being oriented substantially upwards. In such an assembly the device for cutting the vent loose is placed substantially vertically and the centring pin is moved downwards from a position above the carcass to be inserted into the vent of the carcass. After the vent of the slaughtered poultry has been cut loose and clamped as described above, the vent with an intestinal section thereof can be removed from the carcass and the carcass can be subjected to further treatments in a device for cutting open the carcass, a device for eviscerating the carcass, etcetera.

The invention will be elucidated on the basis of an exemplary embodiment shown in the attached drawings, in which:
Figure 1 shows a schematic view of an exemplary embodiment of the distal end of a vent cutter according to the invention, with the centring pin in a position to be placed in the vent opening of the carcass;
Figure 2 shows a schematic view of the vent cutter according to figure 1, wherein the cylindrical blade has been shifted in the direction of the centring pin;
Figure 3 shows a schematic view of the vent cutter of figure 2, wherein the position of the centring pin in the cylindrical blade is indicated;
Figure 4 shows a schematic view of a vent cutter according to the invention, wherein the clamping means are activated and bulge in the direction of the inside of the cylindrical blade;
Figure 5 shows a schematic view of the vent cutter of figure 4 during clamping the orbicular muscle area of the vent or an intestinal section thereof between the inner surface of the blade and the bulged edge of the clamping means, after the blade has cut the vent loose;
Figures 6A, 6B, 6C and 6D show a schematic view in cross-section of exemplary embodiments of a clamping means to be placed around a centring pin;
Figure 7 shows a schematic view in cross-section of a vent cutter provided with a bellows or balloon that can be hydraulically or pneumatically pumped up;
Figures 8A and 8B show schematic views of an exemplary embodiment of a vent cutter according to the invention; and
Figure 9 shows a schematic view of a part of an assembly for treating slaughtered poultry comprising a vent cutter according to the invention, wherein the assembly is adapted for treating substantially vertically placed carcasses.

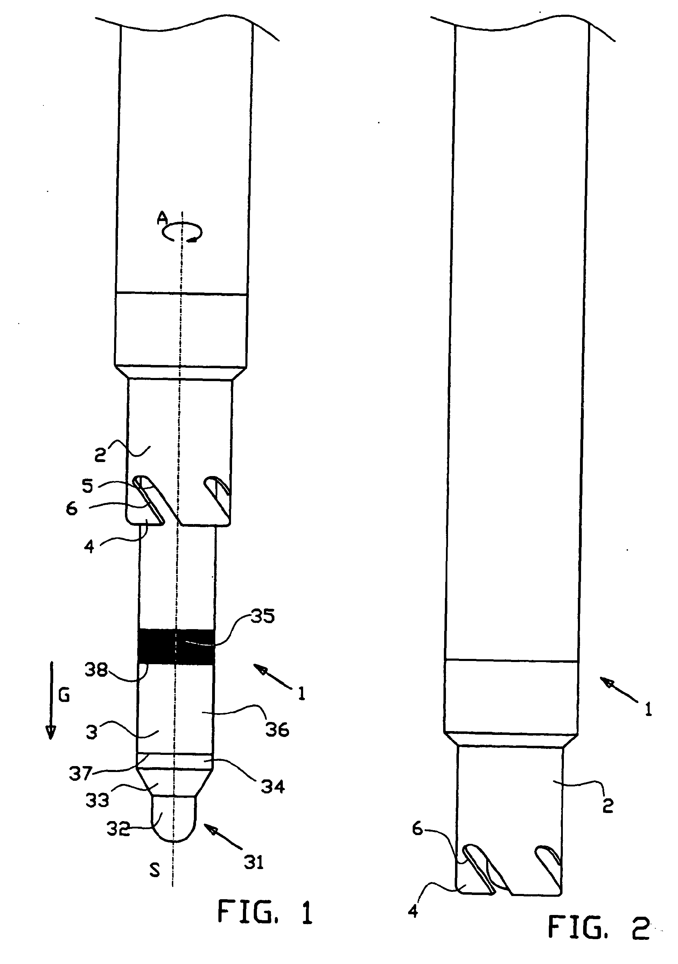

Figure 1 shows the distal section of the vent cutter 1, particularly the distal end of a circle cylindrical blade 2 having a centre line S, and positioned coaxially within it a centring pin 3, which within certain limits is axially movable with respect to the blade 2. The blade 2 is rotatingly driveable in the direction A with means that are not further shown, yet which are known to the expert, whereas the centring pin 3 is placed rotation fixedly with respect to positioning and tensioning means for the carcass that are not further shown, yet which are known to the expert.

The blade 2 has a distal end section, having a substantially circular cutting edge 4, in which a number of regularly spaced apart inclined notches 5 have been disposed. The notches 5 are limited all-round by cutting edges 6, wherein the cutting edge 6 is oriented diagonally in rotation direction A. The cutting edge 6 here forms sharp cutting teeth with the adjacent cutting edge 4.

The centring pin 3 has a distal end section 31, with a bevelled reduced end 32, situated behind that a conically tapering transitional section 33 and situated behind that cylindrical section 34, for forming a thickened head for closing off a vent opening of the carcass. The distal end section 31 is placed on an axis that is concentrically surrounded by a bush 35 that is slidable along the axis in axial direction. The centring pin 3 furthermore comprises a hollow cylinder 36 made of resilient material, which with a first end 37 is coupled to the axis, and which a second end 38 is coupled to the bush 35. By moving both ends 37, 38 towards each other, the middle part of the hollow cylinder 36 will bulge in radial direction, that means substantially perpendicular to the centre line S.

In figure 1 the distal end 31 of the centring pin 3 is passed in the direction of the vent opening of the carcass that is not further shown. It will be understood that the carcass with suitable means -known per se-will be retained in the correct position with respect to the vent cutter. Due to the spherical shape of the reduced end 32 the orbicular muscle of the vent opening is gradually urged out, so that the distal end section 31 of the centring pin 3 easily penetrates the vent opening. Further penetration is enhanced by the truncated conical surface 33, after which the orbicular muscle and the rectum are sufficiently stretched for reliably closing off the vent opening of the carcass.

Subsequently the blade 2 is moved in the direction G while being rotatingly driven in the direction A, as shown in figure 2. The cutting edge 4 and the teeth with cutting edge 6 then cut the vent loose from the carcass.

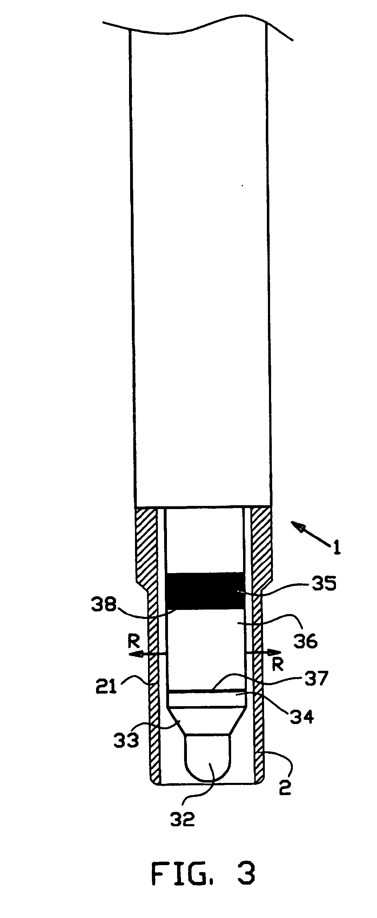

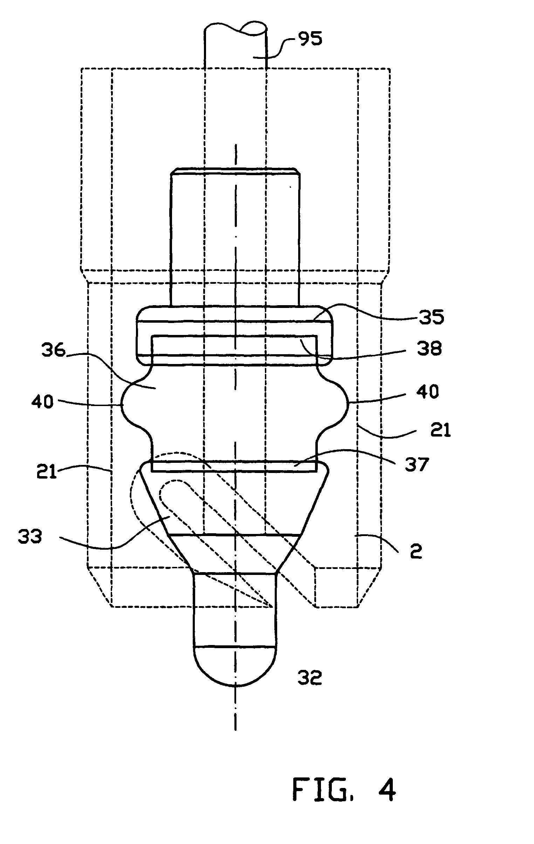

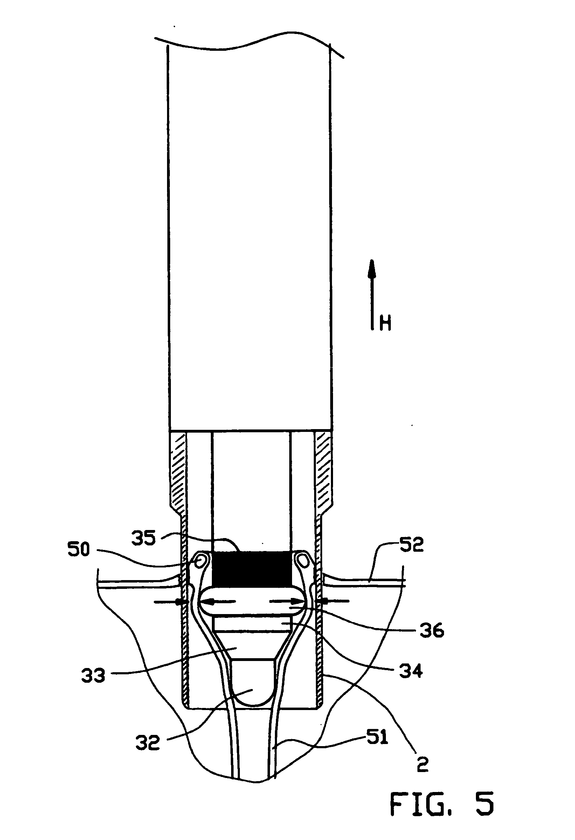

In the figure 3 and 5 the blade 2 is shown in cross-section in order to be able to show the position of the centring pin with respect to the blade 2. In the figure 4 the position of the blade 2 is schematically shown.

After the blade 2 has cut the vent loose and has penetrated the carcass, the rotating drive of the blade 2 is stopped. This position is shown in figure 3. Subsequently the bush 35 is slid in the direction of the distal end 32 of the centring pin. As a result both ends 37, 38 of the hollow cylinder 36 move towards each other and the middle part of the hollow cylinder 36 will bulge in radial direction R, as shown in figure 4. Between the inner surface 21 of the blade 2 and the bulged edge 40 of the hollow cylinder 36 the orbicular muscle area of the vent or an intestinal section thereof can now be clamped, as schematically shown in figure 5.

Subsequently the entire vent cutter 1 can be pulled out of the carcass in the direction H, wherein the orbicular muscle area of the vent or an intestinal section thereof is retained between the inner surface 21 of the blade 2 and the bulged edge 40 of the hollow cylinder 36.

After the vent cutter 1 has been brought at a distance from the carcass, the bush 35 is moved away from the distal end 32 of the centring pin 3. As a result both ends 37, 38 of the hollow cylinder 36 move apart and the middle part of the hollow cylinder 36 will move back in radial direction to the position as shown in figure 3, so that the orbicular muscle area of the vent or an intestinal section thereof is easily released from the distal end section 31 of the centring pin 3. Subsequently or simultaneously the blade 2 can be moved away from the distal end section of the centring pin 3 so that the vent cutter 1 returns to the original position as shown in figure 1. The vent cutter - after cleaning- is then suitable for a next cycle.

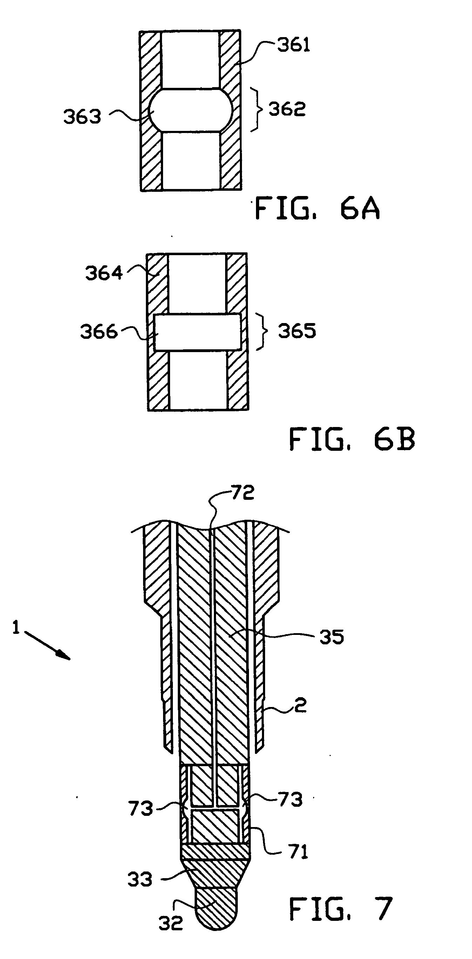

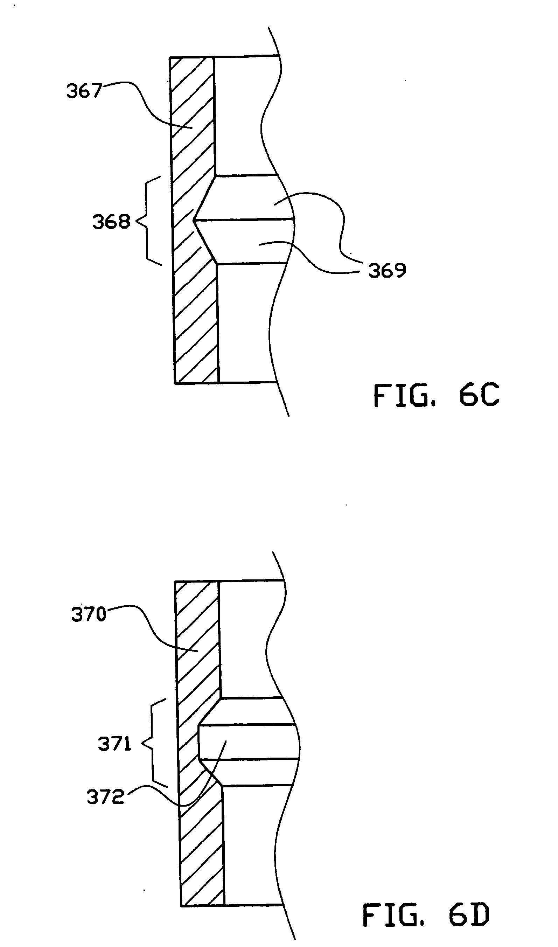

The hollow cylinder 36 may over its full length have a substantially uniform wall thickness. However, preferably the hollow cylinder 36 is provided with an annular section having a wall section of greater flexibility, which considered in axial direction preferably is situated in the middle part of the hollow cylinder. This greater flexibility of the wall of the hollow cylinder 361, 364, 367, 370 may for instance be obtained by providing the inside of the annular section 362, 365, 368, 371 of the hollow cylinder 361, 364, 367, 370 with an annular channel 363, 366, 369, 372 as shown in the figures 6A, 6B, 6C and 6D, respectively. At the location of the annular channel 363, 366, 369, 372 the wall of the hollow cylinder 361, 364, 367, 370 is thinner and has a greater flexibility at that location. Due to the greater flexibility of the wall of the annular section 362, 365, 368, 371 with respect to the rest of the wall of the hollow cylinder 361, 364, 367, 370 predominantly the annular section 362, 365, 368, 371 will bulge in radial direction R, as a result of which at least a part of the outside of the annular section 362, 365, 368, 371 can be operative as clamping surface for in cooperation with the inner surface 21 of the blade 2 clamping the orbicular muscle area of the vent or an intestinal section 50 thereof, as shown in figure 5.

In an embodiment the maximum depth of the hollow channel 363, 366, 369, 372 is at least 25% of the wall thickness of the hollow cylinder 361, 364, 367, 370. In an exemplary embodiment as shown in figure 6A, the hollow cylinder 361 has a length of approximately 22 mm, an outer diameter of approximately 16 mm and the inside of the hollow cylinder 361 has an inner diameter of approximately 10 mm. The hollow cylinder 361 thus has a wall thickness of approximately 3 mm. The hollow channel 363 has a circular cross-section having a radius of curvature of 2.5 mm and a maximum depth of approximately 1 mm.

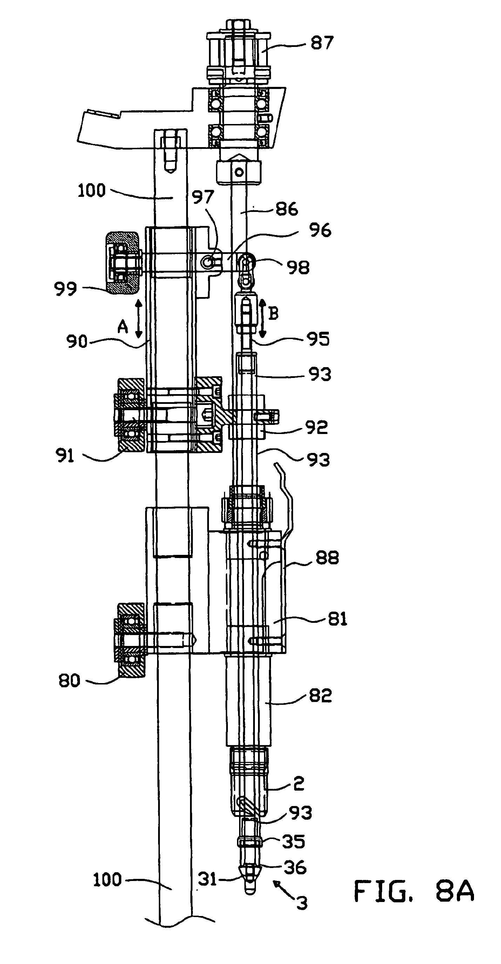

In a further exemplary embodiment, as shown in figure 7, a bellows or balloon 71 can also be placed at the location of the hollow cylinder 36, wherein the bellows or balloon 71 can be pumped up hydraulically or pneumatically for the bulging thereof in radial direction. In this case a slidable bush 35 and the accompanying drive is not necessary. The centring pin 32, 33, 35 may simply comprise an internal channel 72 for allowing a fluid to pass through to the inside 73 of the bellows or balloon 71 for pumping it up or deflating it. The pressing force for clamping the orbicular muscle area between the inner surface of the blade 2 and the outer surface of the bellows or balloon 71 can be controlled by means of setting the pressure of the fluid.

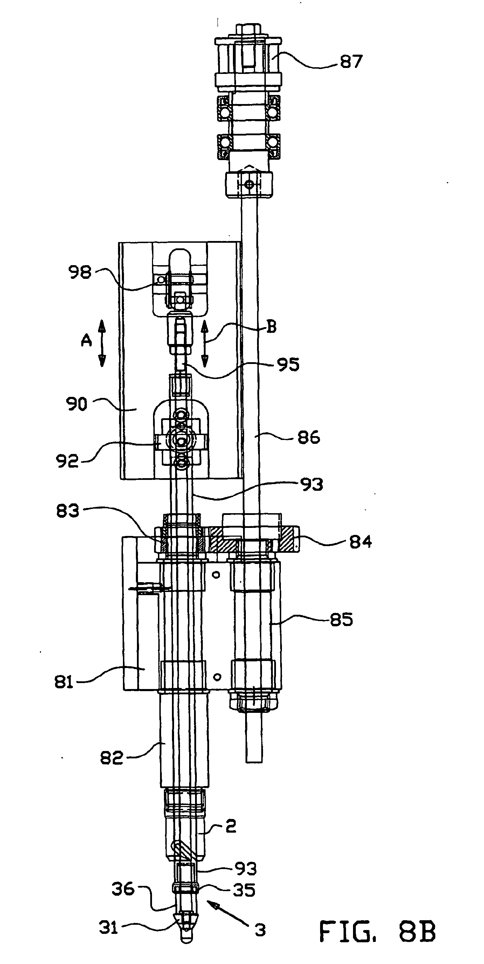

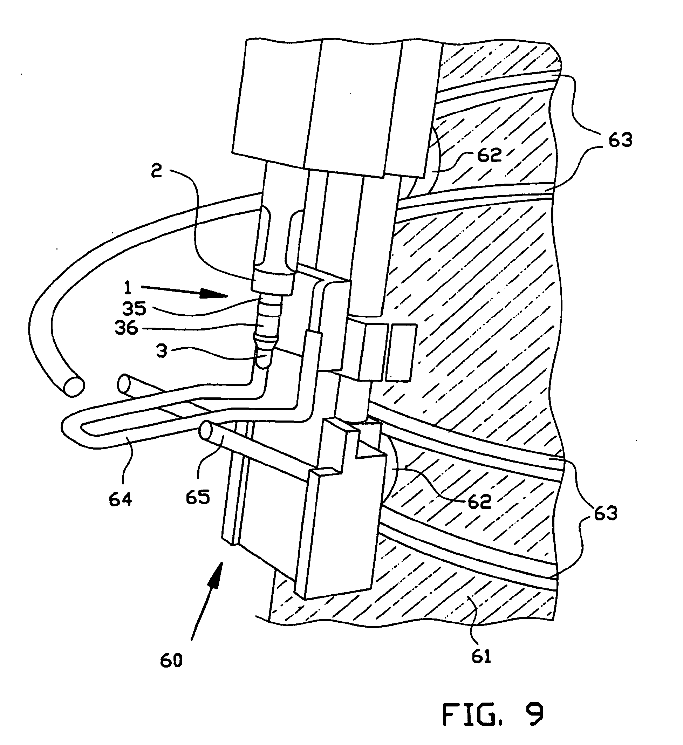

An exemplary embodiment of the vent cutter and its drive is shown in the figures 8A and 8B. Said vent cutter comprises a hollow blade axis 82 which at its end is provided with a blade 2. The blade axis 82 is placed in a blade holder block 81 so as to be rotatable about its axis. The blade holder block 81 is fixedly connected to a frame 100 and is provided with a guide 80. By passing the guide 80 in a first guide path (see figure 9) the position and the motion of the blade holder block 81 and therefore the blade 2 can be controlled.

Through the hollow blade axis 82 a tube 93 has been passed that is slideable in axial direction with respect to the blade axis 82. The tube 93 forms a part of the centring pin 3. The tube 93 is fixedly connected to a centring pin slide block 90. The centring pin slide block 90 is connected to the frame 100 and is movable along the frame 100 in the direction A for sliding the centring pin 3 in axial direction of the blade 2. The centring pin slide block 90 is provided with a guide 91. By passing the guide 91 in a second guide path the position and the motion of the centring pin slide block 90 and therefore the centring pin 3 can be controlled. By changing the mutual position of the first and second guide path the guide 91 of the centring pin slide block 90 can be moved with respect to the guide 80 of the blade holder block 81 and the axial position and motion of the centring pin 3 with respect to the blade 2 can be controlled.

A drive shaft 95 for the hollow cylinder 36 has been passed through the tube 93 which drive shaft with respect to the tube 93 is slideable in axial direction B. At an end situated near the blade 2 the drive shaft 95 is connected to the distal end section 31 of the centring pin 3 (also see figure 4). The other end of the drive shaft 95 is connected to a lever 96 so as to be hinged about an axis 98. Said lever 96 is connected to the centring pin slide block 90 so as to be rotatable about an axis 97. At an end of the lever 96 facing away form the drive shaft 95 a guide wheel 99 has been placed. By passing the guide wheel 99 in a third guide path, the position and the motion of the drive shaft 95 and therefore the distal end section 31 of the centring pin 3 can be controlled via the lever 96. By changing the mutual position of the second and third guide path the drive shaft 95 can be axially displaced with respect to the tube 93, the axial position and motion of the distal end section 31 of the centring pin 3 with respect to the bush 35 placed at the end of the tube 93 can be controlled, and the bulging of the hollow cylinder 35 placed between the distal end section 31 of the centring pin 3 and the bush 35 can be controlled.

As in this exemplary embodiment the drive of the centring pin 3 is placed in line to a side of the blade axis 82 facing away from the blade 2, the drive of the blade axis 82 is shifted laterally as shown in figure 8B. To that end the blade holder block 81 is provided with a drive shaft 85 for the blade 2 placed parallel to the blade axis 82. The blade axis 82 and the drive shaft 85 are mutually coupled by means of a gear wheel transmission, wherein the blade axis 82 is provided with a smaller toothed wheel 83 than the toothed wheel 84 of the drive shaft 85. As a result the blade axis 82, when the drive shaft 85 is driven, will rotate faster than the drive shaft 85. For protection of the gear wheel transmission a protective plate 88 has been disposed.

The drive shaft 85 is connected to a drive pin 86 which is rotatably connected to the frame 100 and spaced apart from the blade holder block 81. At an end facing away from the blade holder block 81, the drive pin 86 is provided with a drive pinion or cage wheel 87 for coupling to a drive device, for instance by means of a transmission such as a toothed belt. If the vent cutter 1 is placed in an assembly for treating a carcass, wherein the assembly is provided with a conveyor device for conveying the carcasses through the assembly and wherein the vent cutter 1, at least temporarily, moves along with the conveyance direction of the carcass, said motion of the vent cutter 1 with respect to the permanent parts of the assembly can be used for driving the drive pinion 87. For that purpose a stationary crown gear is arranged on the permanent parts of the assembly, such as for instance on the drum 61 of figure 9. During moving the vent cutter past the stationary crown gear, the drive pinion 87 runs over the crown gear as a result of which the drive pinion 87 starts rotating for driving the blade 2.

In a further exemplary embodiment as shown in figure 9, the vent cutter 1 is placed for treating substantially vertically placed carcasses, such as for instance carcasses that are suspended by their legs in leg shackles that are suspended from an overhead conveyor in the known manner. The treatment unit 60 is placed against a drum 61, preferably an inclined drum in the shape of a truncated circular cone, and is movable around said drum 61. Around the drum 61 the leg shackles (not shown) are also passed wherein the motion of the treatment unit 60 is synchronous to the motion of the leg shackles. The vertical orientation of the treatment unit 60 with respect to the leg shackles is obtained by passing the guides 62 in guide paths 63 disposed on the drum. The vent cutter 1 according to this exemplary embodiment in this case is provided with a hollow cylinder 36 made of a rubber tube material of for instance NBR 60 to 70 shore.

The treatment unit 60 comprises a leg shackle 64 for accurately placing the carcass with respect to the vent cutter 1. After a carcass has been placed in the leg bracket 64 the brackets 65 are moved upward as a result of which the thighs of the carcass, particularly the legs of the poultry carcass, are clamped between the leg bracket 64 and the brackets 65 for positioning the carcass. The leg bracket 64 ensures that the carcass is centred in radial direction with respect to the vent cutter 1.

In an embodiment for poultry a tail clamp (not shown) can also be placed near the leg bracket 64. Such a tail clamp presses the tail out of the path of the vent cutter 1, so that the blade 2 cannot bore into the tail.

Subsequently the vent cutter 1 is activated for inserting the centring pin 3, cutting the vent loose by means of the cylindrical blade 2, clamping the orbicular muscle area of the vent or an intestinal section thereof between the inner surface of the blade 2 and the bulged edge of the hollow cylinder 36, taking out the clamped orbicular muscle area by retracting the vent cutter 1 from the carcass, wherein the rectum is pulled along or stretched a way, and the vent cutter 1 releasing the vent and rectum, after which they remain outside the carcass for further treatment.

After the vent cutter 1 has completed its activities on this first carcass, the carcass can be conveyed onwards to further treatment devices. Subsequently the treatment unit 60 with the vent cutter 1 can be cleaned, after which it is ready for placing a second carcass therein. Subsequently the vent cutter 1 can repeat its operation cycle on said second carcass, and so on.

Although in the example described above the vent cutter is placed in a substantially vertical or inclined position, it will be clear to the expert that the vent cutter according to the invention may have any desired spatial orientation.

## Claims

1. Device (1) for cutting a vent loose from a carcass, comprising
a hollow cylindrical blade (2) having a cutting edge (4) at its distal end for cutting the vent loose,
a centring pin (3) positioned within it, and extending parallel to the centre line (5) of the blade,
driving means for rotatingly driving the blade, and further **characterised by**
clamping means (36) which are substantially radially movable with respect to the centring pin (3) for clamping an orbicular muscle area of the vent or an intestinal section thereof.

2. Device according to claim 1, wherein
a part of the centring pin (3) that can be disposed in the vent comprises first clamping means (36);
a part of the blade (2) that can be disposed in the carcass comprises second clamping means (21), and
at least one (36) the first (36) and second (21) clamping means is movable in substantially radial direction for clamping the orbicular muscle area of the vent or an intestinal section thereof between said first (36) and second (21) clamping means, and wherein the first clamping (36) means preferably are movable from a first position near the centring pin (3) to a second position near the second clamping means (21).

3. Device according to claim 2, wherein an inner side of the blade (21) forms the second clamping means, and wherein preferably, at least during clamping, the first and second clamping means (21, 36) are placeable in a fixed position of rotation with respect to each other.

4. Device according to any one of the preceding claims, wherein at least one (36) of the first and second clamping mean (21, 36) comprises a hollow cylinder (36), which hollow cylinder is made of a resilient material, and wherein the device comprises means for moving both end planes of the hollow cylinder (36) towards each other for the bulging thereof in radial direction.

5. Device according to claim 4, wherein the hollow cylinder (36), at least near a clamping surface (40) of the hollow cylinder, comprises an annular section (40), wherein the annular section (40) as a higher flexibility than the sections of the hollow cylinder (36) adjacent to this annular section.

6. Device according to claim 5, wherein the annular section (40) is made of a material that is more flexible than the material of the sections of the hollow cylinder (36) adjacent to this annular section (40).

7. Device according to claim 5 or 6, wherein the annular section (40) of the hollow cylinder (36) comprises a thinner wall thickness than the sections of the hollow cylinder (36) adjacent to this annular section (40), and wherein the hollow cylinder (36) at a side of the annular section facing away from the clamping surface preferably comprises one or more substantially annular channels (363, 366, 369, 372).

8. Device according to any one of the claims 4-7, wherein the hollow cylinder (36) is placed around the centring pin (3) and wherein the centring pin (3) preferably comprises a central inner tube (95) and an axially slidable outer tube (93) surrounding it, wherein the one end plane (37) of the hollow cylinder (36) is connected with inner tube (93), and the other end plane (38) of the hollow cylinder (36) is connected to the outer tube (93).

9. Device according to claim 1, 2 or 3, wherein at least one of the first and second clamping means (21, 36) comprises a bellows or balloon (71) wherein the bellows or balloon (71) can be hydraulically or pneumatically pumped up for the bulging thereof in radial direction, wherein the bellows or balloon (71) preferably is placed around the centring pin (3), and wherein the bellows or balloon (71), at least near a clamping surface of the bellows or balloon (71), preferably comprises an annular section, wherein the annular section has a higher flexibility than the sections of the bellows or balloon (71), adjacent to this annular section.

10. Device according to any one of the preceding claims, wherein the centring pin (3) comprises a thickened head at a distal end (31) thereof to be disposed in the vent for closing off the vent opening of the carcass.

11. Device according to any one of the preceding claims, wherein the blade (2) and the centring pin (3) are disposed for mutual axial displacement.

12. Method for cutting a vent loose from a carcass, comprising
at least partially disposing a centring pin (3) in the vent.
cutting the vent loose by means of a rotatingly driven hollow cylindrical blade (2) that remotely surrounds the centring pin (3) and has a cutting edge (4) at a distal end (31) thereof, wherein the centring pin (3) extends parallel to the centre line (5) of the blade (2),
clamping an orbicular muscle area of the or an intestinal section thereof with clamping means (21, 36) by a substantially radial displacement of said clamping means (21, 36) with respect to the centring pin (3).

13. Method according to claim 12, wherein a part of the centring pin (3) disposed in the vent comprises first clamping means (36) and a part of the cylindrical blade (2) disposed in the carcass comprises second clamping mean (21), wherein at least one of the first and second clamping means (21, 36) is displaced in radial direction for clamping the orbicular muscle area of the vent or an intestinal section thereof between said first and second clamping means (21, 36).

14. Assembly for treating a carcass of slaughtered cattle, particularly slaughtered poultry, comprising a device for cutting a vent loose from the carcass according to any one of the preceding claims, and further comprising positioning means (64) for positioning the carcass with respect to the device for cutting the vent loose, and tensioning means (65) for at least while the vent is cut loose retaining the carcass.

## Patentansprüche

1. Vorrichtung (1) zum Losschneiden eines Afters von einer Karkasse, umfassend
ein hohles, zylindrisches Messer (2), mit einer Schnittkante (4) an seinem distalen Ende zum Losschneiden des Afters,
einen darin aufgestellten, sich parallel zu der Herzlinie (s) des Messers erstreckenden Zentrierstift (3),
Antriebsmittel zum rotierend Antrieben des Messers, und weiter **gekennzeichnet durch**
Klemmmittel (36) welche hauptsächlich radial bezüglich des Zentrierstiftes (3) versetzbar sind zum Klemmen eines Ringmuskelgebietes des Afters oder eines Darmabschnittes davon.

2. Vorrichtung nach Anspruch 1, wobei
ein in den After anzuordnendes Teil des Zentrierstiftes (3) erste Klemmmittel (36) umfaßt,
ein in die Karkasse anzuordnendes Teil des Messers (2) zweite Klemmmittel (21) umfaßt, und
zumindest ein (36) der ersten (36) und der zweiten (21) Klemmmittel in hauptsächlich Radialrichtung beweglich ist zum Klemmen des Ringmuskelgebietes des Afters oder eines Darmabschnittes davon zwischen den ersten (36) und den zweiten (21) Klemmmitteln, und wobei die ersten Klemmmittel (36) vorzugsweise von einer ersten Position nahe dem Zentrierstift (3) zu einer zweiten Position nahe den zweiten Klemmmitteln (21) beweglich sind.

3. Vorrichtung nach Anspruch 2, wobei eine Innenseite des Messers (21) die zweiten Klemmmittel bildet, und wobei vorzugsweise, zumindest während dem Klemmen, die ersten und zweiten Klemmmittel (21,36) in einer festen Rotationsposition bezüglich einander anzuordnen sind.

4. Vorrichtung nach einem der vorhergehenden Ansprüche, wobei zumindest ein (36) der ersten und zweiten Klemmmittel (21,36) einen Hohlzylinder (36) umfaßt, welcher Hohlzylinder aus federndem Material hergestellt ist, und wobei die Vorrichtung Mittel umfaßt zum zueinander Bewegen der beiden Endflächen des Hohlzylinders (36) zum in Riadalrichtung Ausstülpen davon.

5. Vorrichtung nach Anspruch 4, wobei der Hohlzylinder (36) zumindest nahe einer Klemmfläche (40) des Hohlzylinders einen ringförmigen Abschnitt (40) umfaßt, wobei der ringförmige Abschnitt (40) eine höhere Flexibilität hat als die an diesem ringförmigen Abschnitt angrenzenden Abschnitte des Hohlzylinders (36).

6. Vorrichtung nach Anspruch 5, wobei der ringförmige Abschnitt (40) aus einem Material hergestellt ist, das mehr flexibel ist als das Material der an diesem ringförmigen Abschnitt (40) angrenzenden Abschnitte des Hohlzylinders (36).

7. Vorrichtung nach Anspruch 5 oder 6, wobei der ringförmige Abschnitt (40) des Hohlzylinders (36) eine dünnere Wanddicke umfaßt als die an diesem ringförmigen Abschnitt (40) angrenzenden Abschnitte des Hohlzylinders (36), und wobei der Hohlzylinder (36) an einer von der Klemmfläche abgekehrten Seite des ringförmigen Abschnitts vorzugsweise einen oder mehrere hauptsächlich ringförmigen Kanäle (363,366,369,372) umfaßt.

8. Vorrichtung nach einem der Ansprüche 4-7, wobei der Hohlzylinder (36) rund den Zentrierstift (3) angeordnet wird und wobei der Zentrierstift (3) vorzugsweise ein zentrales Innenrohr (95) und ein darumhin gelegenes axial verschiebbares Außenrohr (93) umfaßt, wobei die eine Endfläche (37) des Hohlzylinders (36) mit dem Innenrohr (95) verbunden ist und die andere Endfläche (38) des Hohlzylinders (36) mit dem Außenrohr (93) verbunden ist.

9. Vorrichtung nach Anspruch 1, 2 oder 3, wobei zumindest ein der ersten und zweiten Klemmmmittel (21,36) einen Balg oder einen Ballon (71) umfaßt, wobei der Balg oder Ballon (71) hydraulisch oder pneumatisch aufgepumpt zum in Radialrichtung Ausstülpen davon, wobei der Balg oder Ballon (71) vorzugsweise rund den Zentrierstift (3) angeordnet ist, und wobei der Balg oder Ballon (71), zumindest nahe einer Klemmfläche des Balgs oder Ballons (71) vorzugsweise einen ringförmigen Abschnitt umfaßt, wobei der ringförmige Abschnitt eine höhere Flexibilität hat als die an diesem ringförmigen Abschnitt angrenzenden Abschnitte des Balgs oder Ballons (71).

10. Vorrichtung nach einem der vorhergehenden Ansprüche, wobei der Zentrierstift (3) einen verdickten Kopf an einem Distalende (31) davon umfaßt um in den After angeordnet zu werden, um die Afteröffnung der Karkasse abzuschließen.

11. Vorrichtung nach einem der vorhergehenden Ansprüche, wobei das Messer (2) und der Zentrierstift (3) für gegenseitige axiale Versetzung angeordnet sind.

12. Verfahren zum Losschneiden eines Afters von einer Karkasse, umfassend
das zumindest teilweise Anordnen eines Zentrierstiftes (3) im After,
das Losschneiden des Afters durch ein rotierend angetriebenes zylindrisches Hohlmesser (2), das auf Abstand den Zentrierstift (3) umgibt und eine Schnittkante (4) an einem distalen Ende (31) davon hat, wobei der Zentrierstift (3) sich parallel zur Herzlinie (s) des Messers (2) erstreckt,
das Klemmen eines Ringmuskelgebiets des Afters oder eines Darmabschnittes davon mit Klemmmitteln (21,36) durch eine hauptsächlich radiale Versetzung dieser Klemmmittel (21,36) bezüglich des Zentrierstiftes (3).

13. Verfahren nach Anspruch 12, wobei ein Teil des im After angeordneten Zentrierstiftes (3) erste Klemmmittel (36) umfaßt und ein in der Karkasse angeordnetes Teil des zylinderförmigen Messers (2) zweite Klemmmittel (21) umfaßt, wobei zumindest ein der ersten und zweiten Klemmmittel (21,36) in radiale Richtung versetzt wird zum zwischen diesen ersten und zweiten Klemmmitteln (21,36) Klemmen des Ringmuskelgebietes des Afters oder eines Damabschnittes davon.

14. System zum Behandeln einer Karkasse von geschlachtem Vieh, insbesondere geschlachtem Geflügel, umfassend eine Vorrichtung zum Losschneiden des Afters von der Karkasse nach einem der vorhergehenden Ansprüche, und weiter umfassend Aufstellmittel (64) zum Aufstellen der Karkasse bezüglich der Vorrichtung zum Losschneiden des Afters, und Spannmittel (65) zum Zurückhalten der Karkasse, zumindest während der After losgeschnitten wird.

## Revendications

1. Dispositif (1) pour inciser une région anale d'une carcasse comprenant
une lame cylindrique creuse (2) présentant un bord coupant (4) en son extrémité distale pour inciser la région anale ;
une broche de centrage (3) placée dedans et s'étendant parallèlement à la ligne centrale (s) de la lame ;
des moyens d'entraînement permettant de faire tourner la lame et en outre **caractérisé par**
des moyens de serrage (36) pouvant se déplacer de manière essentiellement radiale par rapport à la broche de centrage (3) afin de serrer une zone de muscles orbiculaires de la région anale ou une zone intestinale de la région anale.

2. Dispositif selon la revendication 1 dans lequel
une partie de la broche de centrage (3) qui peut être placée dans la région anale comprend un premier moyen de serrage (36) ;
une partie de la lame (2) qui peut être placée dans la carcasse comprend un deuxième moyen de serrage (21) et
au moins l'un (36) des premiers (36) ou des deuxièmes (21) moyens de serrage peut se déplacer dans une direction essentiellement radiale pour serrer la zone de muscles orbiculaires de la région anale ou une section intestinale de la région anale entre lesdits premiers (36) et deuxièmes (21) moyens de serrage, et dans lequel les premiers moyens de serrage (36) peuvent de préférence se déplacer d'une première position proche de la broche de centrage (3) vers une deuxième position proche des deuxièmes moyens de serrage (21).

3. Dispositif selon la revendication 2 dans lequel un côté interne de la lame (21) forme les deuxièmes moyens de serrage et dans lequel de préférence, au moins au cours du serrage, les premiers et les deuxièmes moyens de serrage (21, 36) peuvent être placés dans une position fixe de rotation les uns par rapport aux autres.

4. Dispositif selon l'une quelconque des revendications précédentes, dans lequel au moins l'un (36) des premiers (36) ou des deuxièmes (21) moyens de serrage comprend un cylindre creux (36), lequel cylindre creux est composé d'un résilient, et dans lequel le dispositif comprend des moyens permettant de déplacer les deux plans d'extrémité du cylindre creux (36) l'un vers l'autre afin d'assurer son bombement dans la direction radiale.

5. Dispositif selon la revendication 4, dans lequel le cylindre creux (36), au moins à proximité d'une surface de serrage (40) du cylindre creux, comprend une section annulaire (40), dans lequel la section annulaire (40) présente une plus grande flexibilité que les sections du cylindre creux (36) adjacent à cette section annulaire.

6. Dispositif selon la revendication 5, dans lequel la section annulaire (40) est composée d'un matériau plus flexible que le matériau des sections du cylindre creux (36) adjacent à cette section annulaire (40).

7. Dispositif selon la revendication 5 ou 6, dans lequel la section annulaire (40) du cylindre creux (36) comprend une épaisseur de paroi plus mince que les sections du cylindre creux (36) adjacent à cette section annulaire (40), et dans lequel le cylindre creux (36) comprend de préférence, sur un côté de la section annulaire dont la face est située en dehors de la surface de serrage, un ou plusieurs canaux essentiellement annulaires (363, 366, 369, 372).

8. Dispositif selon l'une quelconque des revendications 4 à 7, dans lequel le cylindre creux (36) est placé autour de la broche de centrage (3) et dans lequel la broche de centrage (3) comprend de préférence un tube interne central (95) et un tube externe (93) l'entourant, pouvant coulisser de manière axiale, dans lequel le plan d'extrémité (37) du cylindre creux (36) est relié au tube interne (95) et l'autre plan d'extrémité (38) du cylindre creux (36) est relié au tube externe (93).

9. Dispositif selon la revendication 1, 2 ou 3 dans lequel au moins l'un des premiers ou des deuxièmes moyens de serrage (21, 36) comprend un soufflet ou ballon (71) dans lequel le soufflet ou ballon (71) peut être gonflé de manière hydraulique ou pneumatique pour son bombement dans la direction radiale, dans lequel le soufflet ou ballon (71) est placé de préférence autour de la broche de centrage (3) et dans lequel le soufflet ou ballon (71), au moins à proximité d'une surface de serrage du soufflet ou ballon (71), comprend de préférence une section annulaire, dans lequel la section annulaire est plus flexible que les sections du soufflet ou ballon (71) adjacent à cette section annulaire.

10. Dispositif selon l'une quelconque des revendications précédentes dans lequel la broche de centrage (3) comprend une tête épaissie en une extrémité distale (31) afin de pouvoir être placée dans la région anale pour fermer l'ouverture de la région anale de la carcasse.

11. Dispositif selon l'une quelconque des revendications précédentes, dans lequel la lame (2) et la broche de centrage (3) sont placées afin de pouvoir se déplacer de manière axiale l'une par rapport à l'autre.

12. Procédé pour inciser une région anale d'une carcasse, comprenant
placer au moins partiellement une broche de centrage (3) dans la région anale,
inciser la région anale à l'aide d'une lame de cylindrique creuse entraînée de manière rotative (2) qui entoure à distance la broche de centrage (3) et possède un bord coupant (4) en une extrémité distale (31), dans lequel la broche de centrage (3) s'étend parallèlement à la ligne centrale (5) de la lame (2),
serrant une zone de muscles orbiculaires de la région anale ou une zone intestinale de la région anale à l'aide de moyens de serrage (21, 36) grâce à un déplacement essentiellement radial desdits moyens de serrage (21, 36) par rapport à la broche de centrage (3).

13. Procédé conforme à la revendication 12, dans lequel une partie de la broche de centrage (3) placée dans la région anale comprend des premiers moyens de serrage (36) et une partie de la lame cylindrique (2) disposée dans la carcasse comprend des deuxièmes moyens de serrage (21), dans lequel au moins l'un des premiers ou des deuxièmes moyens de serrage (21, 36) peut se déplacer dans une direction radiale pour serrer la zone de muscles orbiculaires de la région anale ou une section intestinale de la région anale entre lesdits premiers et deuxièmes moyens de serrage (21, 36).

14. Assemblage permettant de traiter une carcasse de bétail d'abattoir, en particulier de volaille d'abattoir, comprenant un dispositif pour inciser une région anale d'une carcasse selon l'une quelconque des revendications précédentes, et comprenant en outre des moyens de positionnement (64)' pour positionner la carcasse par rapport au dispositif d'incision de la région anale, et des moyens de mise sous tension (65) pour pouvoir, au moins lors de l'incision de la région anale, retenir la carcasse.
